# EUROPEAN PATENT APPLICATION

(11) **EP 4 456 281 A1**
(43) Date of publication of application: **30.10.2024**
(21) Application number: 22952505.0
(22) Date of filing: 29.07.2022
(51) Int. Cl.: H01M 50/183, H01M 50/204, H01M 50/249

(54) **BATTERY AND ELECTRIC DEVICE**

(71) Applicant: Contemporary Amperex Technology (Hong Kong) Limited, Central, Central And Western District (HK)
(72) Inventor: YAO, Pengcheng, Ningde, Fujian 352100 (CN); ZHANG, Wenhui, Ningde, Fujian 352100 (CN); WANG, Peng, Ningde, Fujian 352100 (CN); CHEN, Xingdi, Ningde, Fujian 352100 (CN)
(74) Representative: Holt, Lucy Rose
(86) International application number: PCT/CN2022/109091
(87) International publication number: WO 2024/021058

(57) **Abstract**

Provided in the embodiments of the present application are a battery and an electric device. The battery comprises a bearing component, a battery cell, a cover plate and a sealing member, wherein the battery cell is fixed to the bearing component; the bearing component comprises a first accommodating cavity having a first opening; the first accommodating cavity is formed in the side of the bearing component facing away from the battery cell; the cover plate is connected to the bearing component and is configured to cover the first opening; and at least part of the sealing member is arranged between the cover plate and the bearing component, so as to seal the first opening. The battery provided in the embodiments of the present application can improve the usage safety of the battery.

## Description

### TECHNICAL FIELD

The present application relates to the technical field of batteries, and particularly to a battery and an electric-powered device.

### BACKGROUND

Batteries are widely used in electronic devices, such as mobile phones, laptops, battery cars, electric cars, electric planes, electric ships, electric toy cars, electric toy ships, electric toy planes and electric tools.

How to improve safety of the batteries in use is an important studying direction in the battery technology.

### SUMMARY

The present disclosure provides a battery and an electric-powered device, which can improve safety of the battery in use.

On a first aspect, the embodiments of the present disclosure provide a battery, including a carrying component, a battery cell, a cover plate and a sealing member. The battery cell is fixed to the carrying component, the carrying component includes a first accommodating chamber with a first opening, and the first accommodating chamber is disposed on a side of the carrying component facing away from the battery cell. The cover plate is connected to the carrying component and is adapted to cover and close the first opening, and the sealing member is at least partially disposed between the cover plate and the carrying component to seal the first opening.

In the above technical solution, the sealing member is disposed between the cover plate and the carrying component to seal the first opening, which greatly reduces the amount of water entering the first accommodating chamber when the battery is wading through water, thereby extending the service life of components in the first accommodating chamber, making the components in the first accommodating chamber close to or in an insulated state, and improving safety of the battery in use.

In some embodiments, the sealing member has a width in a range of 0.2 mm-50 mm.

In the above technical solution, the width of the sealing member is limited to be greater than or equal to 0.2 mm, which can meet the sealing performance requirements of the sealing member, and significantly reduce the amount of water entering the first accommodating chamber. By limiting the width of the sealing member to be less than or equal to 50 mm, it can avoid the sealing member from occupying too much space and having a too large mass, thereby reducing waste of internal space of the battery, increasing utility rate of space, and improving the energy density of the battery.

In some embodiments, the sealing member is made of foaming material, and the width of the sealing member is in a range of 4 mm-30 mm.

In the above technical solution, the material of the sealing member is selected as the foaming material with a relatively low density, and the width of the sealing member is limited to be greater than or equal to 4 mm so as to meet the sealing performance requirements of the foaming material. By limiting the width of the foaming material to be less than or equal to 30 mm, it can avoid the sealing member from occupying too much space and having a relatively large mass, thereby reducing the waste of internal space of the battery, increasing the utility rate of space, and improving the energy density of the battery.

In some embodiments, the sealing member is made of rubber, and the width of the sealing member is in a range of 1 mm to 20 mm.

In the above technical solution, the material of the sealing member may be selected as rubber with a relatively high density, and the width of the sealing member is limited to be greater than or equal to 1 mm so as to meet the sealing performance requirements of the rubber. By limiting the width of the rubber to be less than or equal to 20 mm, it can avoid the sealing member from occupying too much space and having a relatively large mass, thereby reducing the waste of internal space of the battery, increasing the utility rate of space, and improving the energy density of the battery.

In some embodiments, the width of the sealing member is L, a weight of the battery is M, and L and M meet the following requirements: 0.0002 mm/kg ≤ L/M ≤ 5 mm/kg.

In the above technical solution, the value of L/M is limited to be greater than or equal to 0.0002 mm/kg, which can meet the sealing performance requirements of the sealing member, making the components in the first accommodating chamber close to or in the insulated state when the battery is in the condition of wading through water, and improving the safety of the battery in use. By limiting the width of the sealing member to be less than or equal to 5 mm/kg, it is possible to avoid the sealing member from occupying too much space and having a too large mass, thereby reducing waste of internal space of the battery, increasing the utility rate of space, and improving the energy density of the battery.

In some embodiments, when the sealing member is made of foaming material, L and M meet the following requirements: 0.005 mm/kg ≤ L/M ≤ 0.5 mm/kg.

In the above technical solution, the material of the sealing member is selected as foaming material with a relatively low density, and the value of L/M is limited to be greater than or equal to 0.005 mm/kg, so as to meet the sealing performance requirements of the foaming material. By limiting the value of L/M to be less than or equal to 0.5 mm/kg, it is possible to avoid the sealing member from occupying too much space and having a relatively large mass, thereby reducing the waste of internal space of the battery, increasing the utility rate of space, and improving the energy density of the battery.

In some embodiments, when the sealing member is made of rubber material, L and M meet the following requirements: 0.001 mm/kg ≤ L/M ≤ 0.05 mm/kg.

In the above technical solution, the material of the sealing member is selected as the rubber material with a relatively high density, and the value of the L/M is limited to be greater than or equal to 0.001 mm/kg to meet the sealing performance requirements of the rubber. By limiting the value of L/M to be less than or equal to 0.05 mm/kg, it can avoid the sealing member from occupying too much space and having a relatively large mass, thereby reducing the waste of internal space of the battery, increasing the utility rate of space, and improving the energy density of the battery.

In some embodiments, the battery further includes a casing, the casing includes a second opening, and the carrying component covers and closes the second opening to form a second accommodating chamber with the casing; the battery cell is disposed in the second accommodating chamber.

In the above technical solution, the battery cell is accommodated in the casing, and the carrying component covers and closes the second opening to form a closed second accommodating chamber, the sealing of the battery cell is improved and thus the safety of the battery in use is improved.

In some embodiments, the carrying component includes a carrying plate and an annular plate, the carrying plate is adapted to cover and close the second opening so as to form the second accommodating chamber with the casing; the annular plate is disposed on a side of the carrying plate facing away from the casing, and encloses and forms the first accommodating chamber with the carrying plate.

In the above technical solution, the carrying plate and the annular plate enclose and form the first accommodating chamber, the cover plate covers and closes the first opening of the first accommodating chamber, and then form the closed space for accommodating the components, thereby reducing the contamination of the components.

In some embodiments, the annular plate includes a side wall and a top wall, the top wall is disposed opposite the carrying plate and encloses and forms the first opening, and the side wall is disposed around the top wall and is connected to the carrying plate.

In the above technical solution, by disposing the top wall on the side wall, the contact area between the carrying component and the cover plate can be increased, which facilitates the fixing between the cover plate and the carrying component, and improves the sealing effect between the cover plate and the carrying component.

In some embodiments, the sealing member is fixedly connected to the top wall.

In the above technical solution, the sealing member is fixedly connected to the top wall, the top wall encloses and forms the first opening, and thus the sealing member connected to the top wall can provide a good sealing effect.

In some embodiments, a projection of the top wall in its own thickness direction on the sealing member covers the sealing member.

In the above technical solution, the projection of the top wall in its own thickness direction covers the sealing member, the sealing member is completely clamped between the cover plate and the top wall, and all the parts of the sealing member play a sealing role, thereby maximizing the sealing effect of the sealing member.

In some embodiments, the sealing member is formed as an annular structure.

In the above technical solution, since the sealing member is formed as the annular structure, it can enclose the entire first opening, and thus the sealing performance is better.

In some embodiments, the battery further includes a control box, and the control box is accommodated in the first accommodating chamber and is electrically connected to the battery cell.

In the above technical solution, the first accommodating chamber is adapted to receive the control box, and the sealing member seals the first accommodating chamber, which can reduce erosion by the water, extend the service life of the control box, and improve the safety of battery in use.

On a second aspect, the present disclosure provides an electric-powered device, which includes a battery according to any of the embodiments on the first aspect, and the battery is adapted for providing electrical energy.

### BRIEF DESCRIPTION OF THE DRAWINGS

In order to describe the technical solution of the embodiments of the present application more clearly, a brief introduction will be given to the accompanying drawings required in the embodiments of the present application; obviously, the accompanying drawings described below are only some embodiments of the present application, and for ordinary skilled person in the art, other accompanying drawings can be obtained based on the accompanying drawings without any creative effort.
Fig. 1 is a structural schematic diagram of a vehicle provided in some embodiments of the present application;
Fig. 2 is a structural schematic diagram of a battery provided in some embodiments of the present application;
Fig. 3 is an explosive, schematic diagram of a battery provided in some embodiments of the present application;
Fig. 4 is an enlarged view at portion A in Fig. 2;
Fig. 5 is a top view of a battery shown in Fig. 2;
Fig. 6 is a partial cross-sectional view of Fig. 5 at B-B;
Fig. 7 is a structural schematic diagram of a sealing member of the battery shown in Fig. 2.

The accompanying drawings are not drawn to the actual scale.

Reference numerals in the specific embodiments:
1, vehicle;
2, battery; 21, carrying component; 211, first accommodating chamber; 212, first opening; 213, carrying plate; 214, annular plate; 215, side wall; 216, top wall; 22, control box; 23, cover plate; 24, sealing member; 25, casing; 251, second opening; 252, second accommodating chamber; 26, battery cell;
3, controller;
4, motor.

### DETAILED DESCRIPTION

In order to make the purpose, technical solutions and advantages of the embodiments of the present application clearer, the technical solutions in the embodiments of the present application will be clearly described below in combination with the accompanying drawings in the embodiments of the present application. Obviously, the described embodiments are a part of the embodiments of the present application, not all of them. Based on the embodiments in the present application, all other embodiments obtained by ordinary skilled person in the art without creative labor fall within the protection scope of the present application.

Unless otherwise defined, all technical and scientific terms used in the present application have the same meanings as those commonly understood by the person skilled in the art of the present application; the terms used in the specification of the present application are only intended to describe specific embodiments while not limit the present application; the terms "include" and "have" in the description, claims and the above description of accompanying drawings of the present application, and any variations thereof, are intended to cover non-exclusive inclusion. The terms "first", "second", etc. in the description, claims and the above description of accompanying drawings of the present application are used to distinguish different objects, rather than to describe specific sequences or primary and secondary relationships.

When referring to "embodiment" in the present application, it means that specific features, structures, or characteristics described in combination with said embodiment can be included in at least one embodiment of the present application. The phrase appearing in various positions in the description does not necessarily refer to the same embodiment, nor is it an independent or alternative embodiment that is mutually exclusive with other embodiments.

In the description of the present application, it should be noted that unless otherwise specified and limited, the terms "installation", "connection", "coupling", and "attachment" should be broadly understood, for example, they can be fixed connections, detachable connections, or integrated connections; they can be direct connections, or indirect connections through intermediate mediums, or can be internal connections between two components. For ordinary skilled person in the art, the specific meanings of the above terms in the present application can be understood according to specific circumstances.

In the present application, the term "and/or" is only a description of association relationship of associated objects, indicating that there can be three types of relationships, for example, C and/or D can indicate the presence of C alone, the presence of C and D simultaneously, and the presence of D alone. In addition, the character "/" in the present application generally indicates that the associated objects before and after the character are in an "or" relationship.

In the embodiments of the present application, the same reference numerals represent the same components, and for simplicity, detailed descriptions of the same components are omitted in different embodiments. It should be understood that the thickness, length, width, and other dimensions of various components as well as the overall thickness, length, width, and other dimensions of the integrated device in the embodiments of the present application shown in the accompanying drawings, are only illustrative examples and should not constitute any limitations in the present application.

The term "multiple" in the present application refers to two or more (including two).

In the present application, a battery cell may include a lithium ion secondary battery cell, a lithium ion primary battery cell, a lithium sulfur battery cell, a sodium-lithium ion battery cell, a sodium ion battery cell, a magnesium ion battery cell, or the like, and the embodiments of the present application do not limit this aspect. The battery cell can be in a shape of a cylinder, a flat body, a rectangular cuboid or in other shapes, and the embodiments of the present application do not limit this aspect.

The battery mentioned in the embodiments of the present application refers to a single physical module that includes one or more battery cells to provide higher voltage and capacity. For example, the battery mentioned in the present application may include battery modules, battery packs, or the like. The battery generally includes a casing for packaging one or more battery cells. The casing can prevent liquids or other foreign substances from affecting charging or discharging of the battery cells.

The battery cell includes an electrode assembly and electrolyte, and the electrode assembly includes a positive electrode plate, a negative electrode plate, and a separator. The battery cell operates mainly relying on movement of metal ions between the positive and negative electrode plates. The positive electrode plate includes a positive current collector and a positive active substance layer, the positive active substance layer is coated on a surface of the positive current collector; the positive current collector includes a positive coating area and a positive tab connected to the positive coating area, the positive coating area is coated with the positive active substance layer, and the positive tab is not coated with the positive active substance layer. Taking the lithium ion battery cell as an example, the positive current collector can be made of aluminum, and the positive active substance layer includes positive active substance, which may be lithium cobalt oxide, lithium iron phosphate, ternary lithium or lithium manganese oxide. The negative electrode plate includes a negative current collector and a negative active substance layer, the negative active substance layer is coated on a surface of the negative current collector; the negative current collector includes a negative coating area and a negative tab connected to the negative coating area, the negative coating area is coated with the negative active substance layer, and the negative tab is not coated with the negative active substance layer. The negative current collector can be made of copper, the negative active substance layer include negative active substance, and the negative active substance can be carbon or silicon. The separator can be made of PP (polypropylene) or PE (polyethylene), or the like.

The battery cell further includes a shell, and a receiving cavity is formed inside the shell to accommodate the electrode assembly. The shell can protect the electrode assembly from the outside to prevent external foreign objects from affecting the charging or discharging of the electrode assembly.

The battery generally includes a carrying component and a cover plate, the cover plate is adapted to connect with a vehicle body, the carrying component is adapted to fix a battery cell, the carrying component includes an accommodating chamber for storing components, and the cover plate and the carrying component are connected and fixed together to close the accommodating chamber. Since the vehicle may wade through water, there is a risk of water entering the accommodating chamber, which will affect normal use of the components in the accommodating chamber and even damage them.

The inventor found that although the cover plate and the carrying component are fixed, there is still a risk of water entering the accommodating chamber when the vehicle is wading through water, which will affect the normal use of the components inside the accommodating chamber and even lead to abnormal insulation of the components, further leading to safety incidents.

In view of this, the present application provides a technical solution, which improves the sealing between the carrying component and the cover plate by adding a sealing member between the cover plate and the carrying component, thereby meeting the usage requirements of the components inside the accommodating chamber under conditions of wading through water, and improving safety of the battery in use.

The battery cell described in the embodiments of the present application is applicable to the battery and the electric-powered device using the battery.

The electric-powered device can be a vehicle, a mobile phone, a portable device, a laptop, a ship, a spacecraft, an electric toy, an electric tool, and so on. The vehicle can be a fuel powered vehicle, a gas powered vehicle, or a new energy vehicle, and the new energy vehicle can be a pure electric vehicle, a hybrid electric vehicle, an extended range vehicle, or the like; the spacecraft includes an airplane, a rocket, a space shuttle, a space ship, and the like; the electric toy includes a stationary or mobile electric toy, such as a game machine, an electric car toy, an electric ship toy, an electric plane toy, and the like; the electric tool includes a metal cutting electric tool, a grinding electric tool, an assembling electric tool and a railway electric tool, such as an electric drill, an electric grinder, an electric wrench, an electric screwdriver, an electric hammer, an electric impact drill, a concrete vibrator and an electric planer. There are no particular limitations on the above-mentioned electric-powered devices in the embodiments of the present application.

For the convenience of description, the following embodiments are described by taking the vehicle as an example of the electric-powered device.

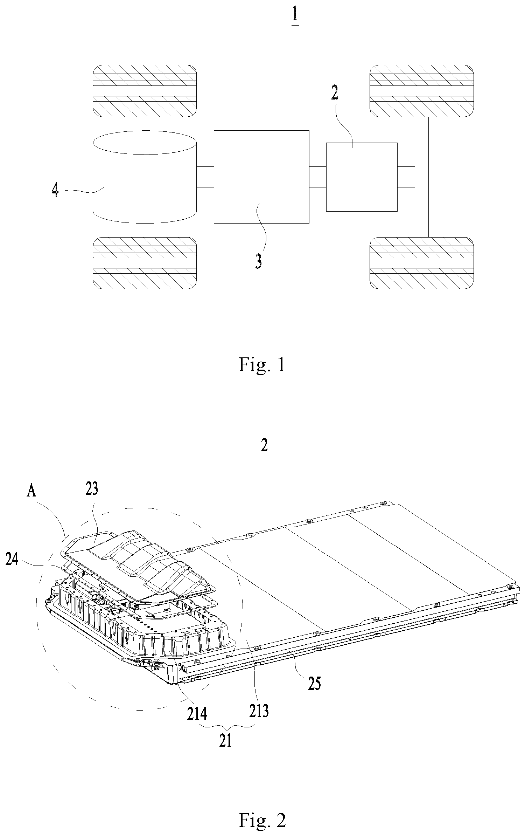

Fig. 1 is a structural schematic diagram of the vehicle provided in some embodiments of the present application.

As shown in Fig. 1, a vehicle 1 is provided with a battery 2 in its interior, and the battery 2 can be installed at a bottom, head, or rear of the vehicle 1. The battery 2 can be adapted for supplying electrical power to the vehicle 1, for example, the battery 2 can serve as an operating power supply of the vehicle 1.

The vehicle 1 may further include a controller 3 and a motor 4, the controller 3 is adapted to control the battery 2 to supply the electrical power to the motor 4, for example, for satisfying working electrical power requirements of the vehicle 1 for starting, navigation, and travelling.

In some embodiments of the present application, the battery 2 can not only serve as the operating power source for the vehicle 1, but also as the driving power source for the vehicle 1, replacing or partially replacing fuel or natural gas to provide driving power for the vehicle 1.

In the battery 2, there may be one battery cell, or multiple battery cells. If there are multiple battery cells, they can be connected in series, in parallel, or in hybrid, where "in hybrid" means that the multiple battery cells are connected both in series and in parallel. The multiple battery cells can be directly connected in series, in parallel, or in hybrid, and an integrity composed of the multiple battery cells can be fixed to the carrying component; certainly, it is also available that the multiple battery cells are connected in series, in parallel, or in hybrid to form battery modules at first, and then multiple battery modules are connected in series, in parallel, or in hybrid to form an integrity, which is fixed to the carrying component.

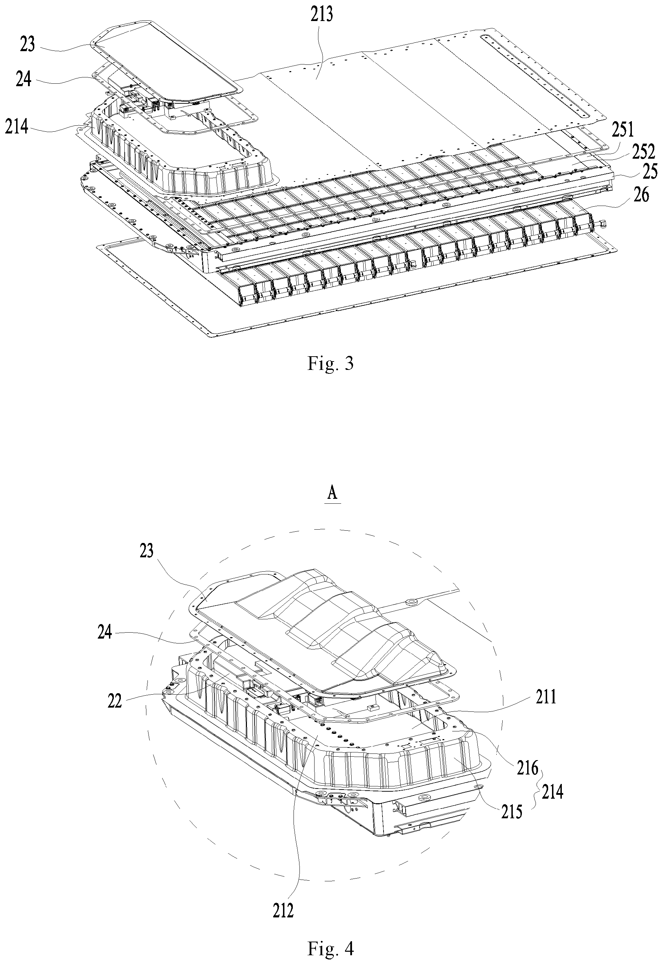

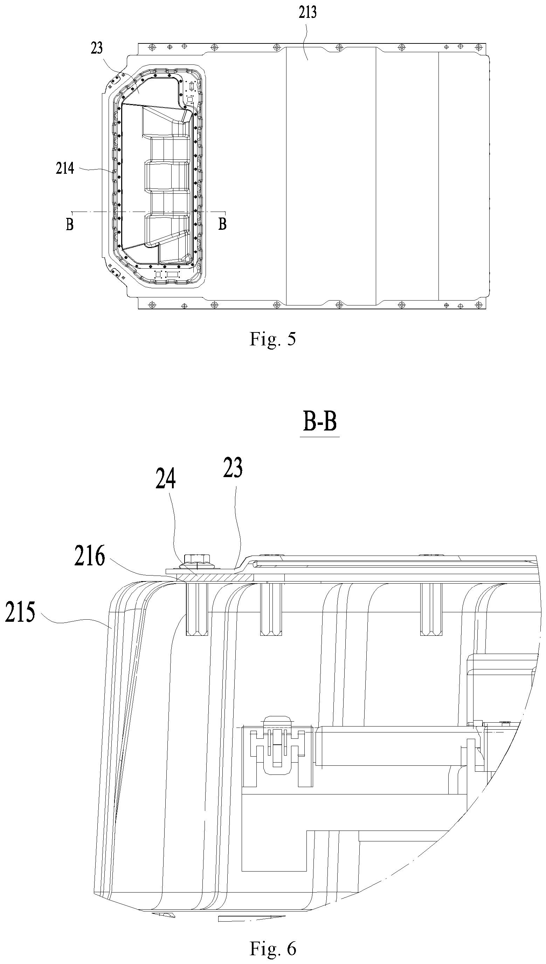

Fig. 2 is a structural schematic diagram of a battery provided in some embodiments of the present application, Fig. 3 is an explosive schematic diagram of a battery provided in some embodiments of the present application, Fig. 4 is an enlarged view of portion A in Fig. 2, Fig. 5 is a top view of the battery shown in Fig. 2, and Fig. 6 is a partial cross-sectional view of Fig. 5 at line B-B.

As shown in Figs. 2-6, the battery 2 of the embodiments of the present application includes a carrying component 21, a battery cell 26, a cover plate 23, and a sealing member 24. The battery cell 26 is fixed to the carrying component 21, the carrying component 21 includes a first accommodating chamber 211 with a first opening 212, and the first accommodating chamber 211 is disposed on a side of the carrying component 21 facing away from the battery cell 26. The battery cell 26 is fixed to the carrying component 21, the cover plate 23 is connected to the carrying component 21 and adapted to cover and close the first opening 212, and the sealing member 24 is at least partially disposed between the cover plate 23 and the carrying component 21 so as to seal the first opening 212.

The embodiments of the present application do not limit the connection manner of the sealing member 24 with the carrying component 21 and the cover plate 23. Exemplarily, the sealing member 24 is fixed with the carrying component 21 and the cover plate 23 by welding, threaded connection, riveting or bonding.

Optionally, the sealing member 24 is entirely located between the cover plate 23 and the carrying component 21.

The embodiments of the present application do not limit the connection manner between the battery cell 26 and the carrying component 21, and the battery cell 26 and the carrying component 21 can be connected by bonding, threaded connection, or other connection manners.

The embodiments of the present application do not limit the kinds of components in the first accommodating chamber 211, and optionally, the components in the first accommodating chamber 211 are electrically connected to the battery cell 26.

The embodiments of the present application do not limit the shape of the sealing member 24, and specifically, the sealing member 24 can be in an annular shape or in other shapes. When the sealing member 24 is in an annular shape, it may be formed by joining multiple segments, or may be formed as an integrated structure.

The embodiments of the present application do not limit the specific material of sealing member 24, while it is required that the material is able to deform to a certain degree and is able to at least partially recover from the deformation when external forces are removed. For example, the material can be rubber.

Due to the presence of the first accommodating chamber 211, when the battery 2 wades through water, the water is prone to be stored in the first accommodating chamber 211, which can lead to abnormal insulation of the components inside the first accommodating chamber 211. In view of this, the sealing member 24 is disposed between the cover plate 23 and the carrying component 21 to seal the first opening 212, which can greatly reduce the amount of water entering the first accommodating chamber 211 when the battery 2 is wading through water, thereby extending the service life of the components inside the first accommodating chamber 211, making the components inside the first accommodating chamber 211 close to or in an insulated state, and improving the safety of the battery in use.

In some embodiments, the sealing member 24 has a width in a range of 0.2 mm-50 mm.

In the embodiments of the present application, the sealing member 24 is disposed around the first opening 212, and since the sealing member 24 may have different dimensions at various portions, the width of the sealing member 24 in the embodiments of the present application refers to the width of the sealing member 24 at any portion.

Exemplarily, when it is necessary to measure the width of the sealing member 24, the sealing member 24 can be detached from the cover plate 23 and the carrying component 21, and then the width of the sealing member 24 can be measured with a vernier caliper.

The width of the sealing member 24 can affect its sealing performance. The larger the width of the sealing member 24, the better the sealing performance, but the lower the energy density of the battery 2; and the smaller the width of the sealing member 24, the worse the sealing performance, but the higher the energy density of the battery 2. In view of this, by limiting the width range of the sealing member 24, the present application regulates the sealing performance of the sealing member 24 and balances the sealing performance of the sealing member 24 with the energy density of the battery 2.

By limiting the width of the sealing member 24 to be greater than or equal to 0.2 mm, the sealing performance requirements of the sealing member 24 can be met, and the amount of water entering the first accommodating chamber 211 can be significantly reduced. By limiting the width of the sealing member 24 to be less than or equal to 50 mm, it can avoid the sealing member 24 from occupying too much space and having a too large mass, thereby reducing waste of internal space of the battery 2, increasing utility rate of space, and improving the energy density of the battery 2.

Optionally, the width of the sealing member 24 can be 0.2 mm, 0.5 mm, 1 mm, 3 mm, 5 mm, 8 mm, 10 mm, 15 mm, 20 mm, 25 mm, 30 mm, 35 mm, 40 mm, 45 mm or 50 mm.

By limiting the width of the sealing member 24 to a range of 0.2 mm-50 mm, the sealing performance of the sealing member 24 and the energy density of the battery 2 can be balanced.

When the sealing member 24 is made of different materials, it will have different sealing performance, and thus the width range required by the sealing member 24 also will different.

In some embodiments, the material of the sealing member 24 includes foaming material, and the width of the sealing member 24 is in a range of 4 mm-30 mm.

In the embodiments of the present application, the width range of the sealing member 24 includes the above two end values of 4 mm and 30 mm.

The embodiments of the present application do not limit the specific kind of the foaming material, and exemplarily, the foaming material includes foaming rubber, foaming silica gel, and the like.

The material of the sealing member 24 is selected as the foaming material with a relatively low density, and the width of the sealing member 24 is limited to be greater than or equal to 4 mm so as to meet the sealing performance requirements of the foaming material. By limiting the width of the foaming material to be less than or equal to 30 mm, it can avoid the sealing member 24 from occupying too much space and having a relatively large mass, thereby reducing the waste of internal space of the battery 2, increasing the utility rate of space, and improving the energy density of the battery 2.

In some embodiments, the material of the sealing member 24 includes rubber, and the width of the sealing member 24 is in a range of 1 mm to 20 mm.

In the embodiments of the present application, the width range of the sealing member 24 includes the two end values of 1 mm and 20 mm.

The material of the sealing member 24 is selected as the rubber with a relatively high density, and the width of the sealing member 24 is limited to be greater than or equal to 1 mm so as to meet the sealing performance requirements of the rubber. By limiting the width of the rubber to be less than or equal to 20 mm, it can avoid the sealing member 24 from occupying too much space and having a relatively large mass, thereby reducing the waste of internal space of the battery 2, increasing the utility rate of space, and improving the energy density of the battery 2.

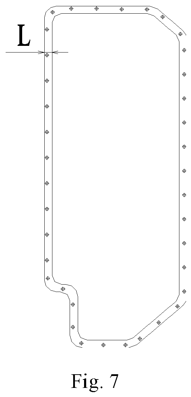

Fig. 7 is a structural schematic diagram of the sealing member of the battery as shown in Fig. 2.

As shown in Fig. 7, in some embodiments, the width of the sealing member 24 is L, a weight of the battery 2 is M, and L and M meet the following requirements: 0.0002 mm/kg ≤ L/M ≤ 5 mm/kg.

The value of L can be measured in many manners, and for example, the value of L can be measured with a vernier caliper.

From the above contents, it can be seen that the larger the width of the sealing member 24, the better its sealing performance, but the lower the energy density of the battery 2; and the smaller the width of the sealing member 24, the worse its sealing performance, but the higher the energy density of the battery 2. In view of this, the present application further balances the sealing performance of the sealing member 24 with the energy density of the battery 2 by limiting the ratio of the width of the sealing member 24 to the weight of the battery 2.

The larger the value of L/M, the better the sealing performance, while the lower the energy density of the battery 2. If the value of L/M value is too large, an over-design will be caused, resulting in a relatively low energy density of the battery 2. However, the smaller the width of the sealing member 24, the worse the sealing performance thereof.

In view of this, the value of L/M is limited to be greater than or equal to 0.0002 mm/kg, which can meet the sealing performance requirements of the sealing member 24, thereby making the components in the first accommodating chamber 211 close to or in the insulated state when the battery 2 is in the condition of wading through water, and improving the safety of the battery 2 in use. By limiting the width of the sealing member 24 to be less than or equal to 5 mm/kg, it can avoid the sealing member 24 from occupying too much space and having a too large mass, thereby reducing waste of internal space of the battery 2, increasing the utility rate of space, and improving the energy density of the battery 2.

Optionally, the value of L/M can be 0.0002 mm/kg, 0.001 mm/kg, 0.005 mm/kg, 0.01 mm/kg, 0.05 mm/kg, 0.1 mm/kg, 0.5 mm/kg, 0.8 mm/kg, 1 mm/kg, 2 mm/kg, 3 mm/kg, 4 mm/kg, or 5 mm/kg.

From the above contents, it can be seen that when different materials are selected for the sealing member 24, the sealing performance of the sealing member 24 will be different, and thus the required width range will also be different.

In some embodiments, when the sealing member 24 is made of the foaming material, L and M meet the following requirements: 0.005 mm/kg ≤ L/M ≤ 0.5 mm/kg.

The embodiments of the present application do not limit the specific kind of the foaming material, and exemplarily, the foaming material includes foaming rubber, foaming silica gel, and the like.

The material of sealing member 24 is selected as the foaming material with a relatively low density, and the value of L/M is limited to be greater than or equal to 0.005 mm/kg, so as to meet the sealing performance requirements of the foaming material. By limiting the value of L/M to be less than or equal to 0.5 mm/kg, it can avoid the sealing member 24 from occupying too much space and having a too large mass, thereby reducing the waste of internal space of the battery 2, increasing the utility rate of space, and improving the energy density of the battery 2.

In some embodiments, when the sealing member 24 is made of rubber material, L and M meet the following requirements: 0.001 mm/kg ≤ L/M ≤ 0.05 mm/kg.

The material of the sealing member 24 is selected as the rubber material with a relatively high density, and the value of the L/M is limited to be greater than or equal to 0.001 mm/kg to meet the sealing performance requirements of the rubber. By limiting the value of L/M to be less than or equal to 0.05 mm/kg, it can avoid the sealing member 24 from occupying too much space and having a too large mass, thereby reducing the waste of internal space of the battery 2, increasing the utility rate of space, and improving the energy density of the battery 2.

In some embodiments, the battery 2 further includes a casing 25, which includes a second opening 251, and the carrying component 21 covers and closes the second opening 251 to form a second accommodating chamber 252 with the casing 25; the battery cell 26 is disposed in the second accommodating chamber 252.

The embodiments of the present application do not limit the shape of the casing 25, and optionally, the casing 25 matches the shape and size of the internal battery cell 26.

By accommodating the battery cell 26 in the casing 25, and covering and closing the second opening 251 by the carrying component 21 to form a closed second accommodating chamber 252, the sealing for the battery cell 26 is improved and thus the safety of the battery 2 in use is improved.

In some embodiments, the carrying component 21 includes a carrying plate 213 and an annular plate 214, the carrying plate 213 is adapted to cover and close the second opening 251 to form the second accommodating chamber 252 with the casing 25; the annular plate 214 is disposed on a side of the carrying plate 213 facing away from the casing 25, and encloses and forms the first accommodating chamber 211 with the carrying plate 213.

The embodiments of the present application do not limit the shape of the annular plate 214, and optionally, the annular plate 214 matches the shape of the components in the first accommodating chamber 211.

The embodiments of the present application do not limit the shape of the carrying plate 213, and optionally, the carrying plate 213 matches the shape and size of the casing 25.

The embodiments of the present application do not limit the connection manner between the carrying plate 213 and the annular plate 214, and exemplarily, the carrying plate 213 and the annular plate 214 can be connected by integrally forming, bonding, riveting, or threaded connection.

The carrying plate 213 and the annular plate 214 enclose and form the first accommodating chamber 211, and the cover plate 23 covers and closes the first opening 212 of the first accommodating chamber 211, thereby forming a closed space for accommodating the components and reducing the contamination of the components.

In some embodiments, the annular plate 214 includes a side wall 215 and a top wall 216, the top wall 216 is disposed opposite the carrying plate 213 and encloses and forms the first opening 212, and the side wall 215 is disposed around the top wall 216 and connected to the carrying plate 213.

The embodiments of the present application do not limit the connection manner between the side wall 215 and the top wall 216, and exemplarily, the side wall 215 and the top wall 216 are integrally formed.

The side wall 215 is disposed around the top wall 216, that is, the side wall 215 is connected to an outer periphery of the top wall 216, and the top wall 216 extends inward from the side wall 215 to enclose and form the first opening 212.

Optionally, the top wall 216 is connected to an end of the side wall 215 facing away from the carrying plate 213. Further optionally, the top wall 216 is parallel to the carrying plate 213.

By providing the top wall 216 on the side wall 215, the contact area between the carrying component 21 and the cover plate 23 can be increased, thereby facilitating the fixing of the cover plate 23 with the carrying component 21, and improving the sealing effect between the cover plate 23 and the carrying component 21.

In some embodiments, the sealing member 24 is fixedly connected to the top wall 216.

Optionally, the sealing member 24 is connected with the top wall 216 and the cover plate 23 by threaded connection.

The sealing member 24 is fixedly connected to the top wall 216, the top wall 216 encloses and forms the first opening 212, and thus the sealing member 24 connected to the top wall 216 can provide a good sealing effect.

In some embodiments, a projection of the top wall 216 in its own thickness direction on the sealing member 24 covers the sealing member 24.

Optionally, the sealing member 24 is formed in a plate-like shape, and the top wall 216 is parallel to the sealing member 24.

The projection of the top wall 216 in its own thickness direction covers the sealing member 24, the sealing member 24 is completely clamped between the cover plate 23 and the top wall 216, and all the parts of the sealing member 24 contribute to the sealing effect, thereby maximizing the sealing effect of the sealing member 24.

In some embodiments, the sealing member 24 is formed in an annular structure.

The sealing member 24 can be an annular structure formed by connecting or joining multiple segments, or an annular structure integrally formed.

The embodiments of the present application do not limit the specific shape of the annular structure, and exemplarily, the shape of the sealing member 24 matches the shape of the top wall 216.

By forming the sealing member 24 as the annular structure, the first opening 212 can be entirely enclosed, resulting in better sealing performance.

In some embodiments, the battery 2 further includes a control box 22, which is accommodated in the first accommodating chamber 211 and electrically connected to the battery cell 26.

Optionally, the control box 22 is a high-voltage box adapted to control opening and closing of relays.

The first accommodating chamber 211 of the embodiments of the present application is adapted to accommodate the control box 22, and the sealing member 24 seals the first accommodating chamber 211, thereby reducing erosion of water, extending service life of the control box 22, and improving the safety of the battery 2 in use.

The embodiments of the present application further provide an electric-powered device, including the battery 2 as described above, which is adapted to provide electric energy.

Please refer to Figs. 2 to 6, the embodiments of the present application provide a battery 2, which includes a carrying component 21, a battery cell 26, a cover plate 23, a casing 25, a control box 22, and a sealing member 24. The carrying component 21 includes a first accommodating chamber 211 with a first opening 212, the battery cell 26 is fixed to the carrying component 21, the cover plate 23 is connected to the carrying component 21 and adapted to cover and close the first opening 212, and the sealing member 24 at least partially disposed between the cover plate 23 and the carrying component 21 to seal the first opening 212. The casing 25 has a second opening 251, and the carrying component 21 covers and closes the second opening 251 to form a second accommodating chamber 252 with the casing 25; and the battery cell 26 is located in the second accommodating chamber 252. The control box 22 is accommodated in the first accommodating chamber 211 and electrically connected to the battery cell 26.

The sealing member 24 is formed as an annular structure. The width of the sealing member 24 is greater than 0.2 mm and less than 50 mm. The width of the sealing member 24 is L, the weight of the battery 2 is M, and L and M meet the following requirements: 0.0002 mm/kg ≤ L/M ≤ 5 mm/kg.

The carrying component 21 includes a carrying plate 213 and an annular plate 214, the carrying plate 213 is adapted to cover and close the second opening 251 and form the second accommodating chamber 252 with the casing 25; the annular plate 214 is disposed on a side of the carrying plate 213 facing away from the casing 25, and encloses and forms the first accommodating chamber 211 with the carrying plate 213. The annular plate 214 includes a side wall 215 and a top wall 216, the top wall 216 is located on a side of the side wall 215 facing away from the carrying plate 213 and encloses and forms the first opening 212, the side wall 215 is disposed around the top wall 216 and connected to the carrying plate 213. The sealing member 24 is fixedly connected to the top wall 216.

It should be noted that in the absence of conflicts, the embodiments and the features in the embodiments in the present application can be combined with each other.

Finally, it should be noted that the above embodiments are only used to illustrate the technical solutions of the present application, while not to limit the present application; although the present application has been described in detail with reference to the above-mentioned embodiments, ordinary skilled person in the art should understand that they can still modify the technical solutions mentioned in the various embodiments as described above or equivalently replace some of the technical features, but these modifications or replacements do not make the essence of the corresponding technical solutions deviate from the spirit and scope of the technical solutions in the various embodiments of the present application.

## Claims

1. A battery, comprising:
a battery cell;
a carrying component, wherein the battery cell is fixed to the carrying component, the carrying component comprises a first accommodating chamber with a first opening, and the first accommodating chamber is disposed on a side of the carrying component facing away from the battery cell;
a cover plate, connected to the carrying component and adapted to cover and close the first opening; and
a sealing member, at least partially disposed between the cover plate and the carrying component to seal the first opening.

2. The battery according to claim 1, wherein the sealing member has a width in a range of 0.2 mm-50 mm.

3. The battery according to claim 2, wherein the sealing member is made of foaming material, and the width of the sealing member is in a range of 4 mm-30 mm.

4. The battery according to claim 2, wherein the sealing member is made of rubber, and the width of the sealing member is in a range of 1 mm to 20 mm.

5. The battery according to any of claims 1-4, wherein the width of the sealing member is L, a weight of the battery is M, and L and M meet the following requirements: 0.0002 mm/kg ≤ L/M ≤ 5 mm/kg.

6. The battery according to claim 5, wherein when the sealing member is made of foaming material, L and M meet the following requirements: 0.005 mm/kg ≤ L/M ≤ 0.5 mm/kg.

7. The battery according to claim 5, wherein when the sealing member is made of rubber material, L and M meet the following requirements: 0.001 mm/kg ≤ L/M ≤ 0.05 mm/kg.

8. The battery according to any of claims 1-7, further comprising a casing, the casing comprises a second opening, and the carrying component covers and closes the second opening to form a second accommodating chamber with the casing;
the battery cell is disposed in the second accommodating chamber.

9. The battery according to claim 8, wherein the carrying component comprises a carrying plate and an annular plate, the carrying plate is adapted to cover and close the second opening so as to form the second accommodating chamber with the casing; the annular plate is disposed on a side of the carrying plate facing away from the casing, and encloses and forms the first accommodating chamber with the carrying plate.

10. The battery according to claim 9, wherein the annular plate comprises a side wall and a top wall, the top wall is disposed opposite the carrying plate and encloses and forms the first opening, and the side wall is disposed around the top wall and is connected to the carrying plate.

11. The battery according to claim 10, wherein the sealing member is fixedly connected to the top wall.

12. The battery according to claim 11, wherein a projection of the top wall in its own thickness direction on the sealing member covers the sealing member.

13. The battery according to claim 1, wherein the sealing member is formed as an annular structure.

14. The battery according to any of claims 1-13, further comprising a control box, wherein the control box is accommodated in the first accommodating chamber and is electrically connected to the battery cell.

15. An electric-powered device, comprising a battery according to any of claims 1 to 14 adapted for providing electrical energy.
